# FASCICULE DE BREVET EUROPEEN

(11) **EP 1 726 679 B1**
(45) Date de publication et mention de la délivrance du brevet: **13.07.2011**
(21) Numéro de dépôt: 06114593.4
(22) Date de dépôt: 26.05.2006
(51) Int. Cl.: C22C 47/08, B23K 26/22

(54) **Procédé de fabrication d'une nappe liée constituée de fils céramiques à matrice métallique et nappe liée obtenue par le procédé**
Verfahren und Vorrichung zur Herstellung eines mit Keramikfasern verstärkten Metallbands und ein so hergestelltes Metallband
Method and device for producing a ceramic-fiber-reinforced metal strip and metal strip produced thereby

(30) Priorité: 27.05.2005 FR 0551405
(43) Date de publication de la demande: 29.11.2006
(73) Titulaire: SNECMA, 75015 Paris (FR)
(72) Inventeur: FRANCHET, Jean-Michel, 75018 Paris (FR); KLEIN, Gilles, 95540 Mery Sur Oise (FR)
(74) Mandataire: David, Daniel

(56) Documents cités:
- WO-A-98/11265
- GB-A- 954 895
- US-A1- 2004 020 904

## Description

L'invention concerne un procédé de fabrication d'une nappe composée d'une pluralité de fils céramiques à matrice métallique selon le préambule de la revendication 1. Un tel procédé est connu de US 2004/0020904 A. L'invention concerne également une nappe obtenue par un tel procédé.

Dans le domaine de l'aéronautique, notamment, un objectif constant est l'optimisation de la résistance des pièces pour une masse et un encombrement minimaux. C'est ainsi que certaines pièces peuvent désormais comporter un insert en matériau composite à matrice métallique, la pièce pouvant être monobloc. Un tel matériau composite comporte une matrice d'alliage métallique, par exemple d'alliage de titane Ti, au coeur de laquelle s'étendent des fibres, par exemple des fibres céramiques de carbure de silicium SiC. De telles fibres présentent une résistance en traction bien supérieure à celle du titane (typiquement, 4000 MPa contre 1000 MPa). Ce sont donc les fibres qui reprennent les efforts, la matrice en alliage métallique assurant une fonction de liant avec le reste de la pièce, ainsi que la protection et l'isolation des fibres qui ne doivent pas entrer en contact les unes avec les autres. En outre, les fibres céramiques sont résistantes à l'érosion, mais doivent nécessairement être renforcées par du métal.

Ces matériaux composites peuvent être utilisés dans la formation de disques, d'arbres, de corps de vérins, de carters, d'entretoises, comme renforts de pièces monolithiques telles des aubes, etc.

Pour réaliser un tel insert de matériau composite, on fabrique préalablement des fils dits "fils enduits", comprenant une fibre de céramique enduite de métal. Le métal donne au fil l'élasticité et la souplesse nécessaires à sa manipulation. De préférence, un fil très fin de carbone ou de tungstène s'étend au centre de la fibre, le long de son axe, ce fil de carbone est enrobé de carbure de silicium, tandis qu'une fine couche de carbone est prévue à l'interface entre la fibre et le métal, pour assurer une fonction de barrière de diffusion et de tampon lors de la relaxation thermique différentielle qui intervient au moment du refroidissement du métal liquide déposé sur la fibre.

Les fils de matériau composite, ou fils enduits, peuvent être fabriqués de diverses manières, par exemple par dépôt de métal en phase vapeur sous un champ électrique, par électrophorèse à partir de poudre métallique ou encore par enduction de fibres céramiques au trempé dans un bain de métal liquide. Un procédé d'enduction de fibres céramiques, au trempé, dans un métal liquide, est présenté dans le brevet EP 0 931 846, au nom de la Demanderesse. La fabrication par ce procédé est rapide.

Dans les procédés connus de réalisation d'une pièce avec un insert en matériau composite à matrice d'alliage métallique, le fil enduit est mis en forme en une pièce que l'on nomme préforme. La préforme est obtenue par bobinage du fil enduit entre deux flasques métalliques de maintien s'étendant autour d'un mandrin central. Le bobinage est en spirale, la préforme obtenue se présentant sous la forme d'un disque, dont l'épaisseur est celle du fil enduit. Afin d'assurer la cohésion de la préforme, les flasques de maintien comportent des ajours au travers desquels on pulvérise un matériau remplissant une fonction de collage, par exemple une résine d'acrylique.

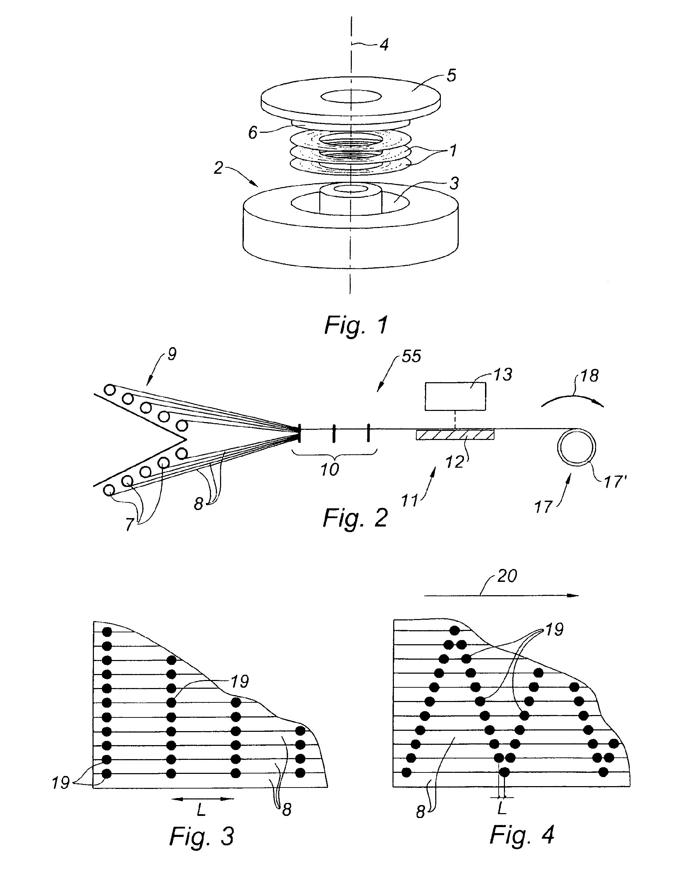

La figure 1 représente de manière schématique une opération de fabrication d'une pièce avec un insert en matériau composite. Une pluralité de préformes 1, chacune en forme de disque, sont empilées dans un conteneur 2, de forme globalement cylindrique. Le conteneur comporte une cavité annulaire 3, dont la forme en coupe transversale à l'axe 4 du conteneur est celle des préformes 1. Les préformes 1 sont empilées jusqu'à remplir toute la hauteur de la cavité 3. Typiquement, 80 préformes sont ainsi empilées. Cette opération est manuelle.

Il est alors nécessaire d'effectuer une opération de déliantage, suivie d'un dégazage, afin d'ôter le liant, par exemple une résine d'acrylique, des préformes 1. En effet, il ne doit rester aucun élément contaminant, à froid et à chaud, avec le titane, au stade de la compaction.

Un couvercle annulaire 5, comportant une saillie 6 de forme complémentaire à celle de la cavité annulaire, mais de dimension axiale plus faible, est rapporté sur le dessus du conteneur 2, la saillie 6 étant mise en contact avec la préforme 1 supérieure. On soude le couvercle 5 au conteneur 2, par exemple par soudage par faisceau d'électrons, la cavité étant de préférence maintenue sous vide. On procède ensuite à la compaction isostatique à chaud de l'ensemble. Lors de cette dernière, l'insert composé de fil enduits juxtaposés est compacté et les gaines métalliques des fils enduits se soudent entre elles et avec les parois de la cavité 3 du conteneur 2, par diffusion, pour former un ensemble dense composé d'alliage métallique (par exemple un alliage de Titane), au sein de laquelle s'étendent annulairement les fibres de céramique (par exemple SiC).

On obtient une pièce cylindrique, comportant un insert en matériau composite, résultat de la compaction des préformes 1 empilées. Cette pièce peut éventuellement subir un traitement de relaxation des contraintes permettant de compenser la dilatation différentielle entre les fibres céramiques et le métal, dans lequel elles sont noyées, lors du refroidissement de l'ensemble.

La pièce est ensuite généralement usinée. Par exemple, si l'objectif est la fabrication d'un disque de compresseur monobloc - par monobloc, on entend que les aubes sont formées d'une seule pièce avec le disque - le conteneur, comportant son insert de matériau composite, est usiné, de façon à former un disque aubagé monobloc (DAM), une partie de la jante supportant les aubes comportant l'insert de matériau composite. La jante est de dimensions très inférieures aux jantes de disques métalliques classiques, grâce aux grandes valeurs de raideur et de résistance conférées à l'ensemble par les fibres céramiques de l'insert en matériau composite, contenu dans la masse de la jante. Notamment, une telle jante peut se présenter sous la forme d'un simple anneau.

Ce procédé de fabrication d'une pièce avec un insert en matériau composite présente des inconvénients, et est difficilement industriellement exploitable du fait de la longueur, de la complexité et de la précision requise de ses étapes.

Tout d'abord, les fibres de céramique étant fragiles, les opérations sur les fils enduits doivent avant tout empêcher tout contact entre elles, et le soudage de fils enduits n'a pas été envisagé jusqu'à présent.

En outre, les opérations de déliantage et de dégazage sont longues, et on n'est jamais certain que la totalité du liant ait été enlevée. Afin de s'assurer de la complète disparition du liant nécessaire notamment au bon comportement subséquent de l'alliage de Titane, plusieurs étapes de déliantage et dégazage sont nécessaires, ce qui augmente la durée et le coût globaux du procédé.

De surcroît, en cas de rupture du fil lors de son bobinage entre les deux flasques, il est nécessaire de former une nouvelle préforme, dans la mesure où il n'existe pas actuellement de moyens permettant de résoudre le problème et de reprendre le bobinage.

Par ailleurs, l'étape de positionnement des préformes de fil enduit dans le conteneur est actuellement manuelle. Le coût de l'opération et surtout sa précision s'en trouvent affectés. Or, le positionnement du fil enduit dans le conteneur est un facteur critique de la gamme de fabrication, dans la mesure où il conditionne les performances du matériau, avec une influence très importante de l'orientation de la fibre céramique en fonction des sollicitations principales de la pièce. Il conditionne également la qualité du matériau composite, par la conservation de l'intégrité de la fibre céramique, lors des différentes étapes de fabrication de la pièce. Il conditionne enfin le coût final de la pièce, de nouveau, du fait que les opérations de positionnement des fils enduits sont relativement longues et effectuées de manière manuelle. Le positionnement des fils dans le conteneur gagnerait donc à être amélioré.

On connaît aussi, un procédé comprenant la formation d'une nappe d'une pluralité de fils métalliques côte à côte, selon lequel les fils, placés parallèlement les uns aux autres et en contact, sont amenés à passer entre deux rouleaux formant laminoir. Celui-ci provoque le soudage des fils les uns aux autres. Un tel procédé est difficilement applicable à des fils enduits tels que ceux utilisés dans la formation d'une pièce avec un insert en matériau composite conformément à l'invention, car ces fils enduits comportent une fibre céramique très fragile en leur centre, qui risque d'être cassée par le manque de précision d'un tel procédé. Une telle rupture annule tous les avantages liés à la présence de fibres céramiques au sein de l'insert en matériau composite. De plus, ce procédé, nécessairement réalisé à chaud, engendre une contamination de surface de la gaine en titane qu'il faut ensuite éliminer impérativement.

L'invention a pour objet un procédé permettant de constituer une nappe de fils enduits de manière fiable et industrielle, qui soit manipulable et utilisable dans un procédé de formation d'une pièce comportant un insert en matériau composite.

Conformément à l'invention on parvient à cet objet avec un procédé de fabrication d'une nappe comportant une pluralité de fils enduits, qui comprennent une fibre céramique enrobée d'une gaine métallique, caractérisé par le fait que l'on dispose les fils les uns à côté des autres dans un même plan, et on soude les fils entre eux, par points, par soudage laser.

Le procédé de l'invention permet la réalisation d'un produit semi fini qui peut être manipulé et travaillé aisément. On contrôle la rigidité de la nappe par l'espacement entre les points de solidarisation. En outre, le soudage laser permet une grande précision dans la réalisation des points de soudure qui est importante pour ne pas endommager les fibres céramiques. Enfin la méthode peut être automatisée aisément et rend cette technique économiquement intéressante.

Plus particulièrement, on entraîne les fils devant un dispositif de soudage par laser qui forme des points de soudure alignés en segments perpendiculaires à la direction d'entraînement des fils ou encore en zigzag. L'inverse peut être vrai aussi, où c'est le dispositif de soudage qui se déplace par rapport à la nappe de fils. Les fils peuvent être immobiles lors de la formation d'un segment de points de soudure.

L'invention sera mieux comprise et d'autres caractéristiques ressortiront à la lecture de la description qui suit de la mise en oeuvre du procédé de l'invention en référence aux dessins annexés sur lesquels
- la figure 1 représente une vue en perspective schématique d'une opération de fabrication d'une pièce avec un insert en matériau composite de l'art antérieur ;
- la figure 2 représente une vue schématique d'un dispositif de formation d'une nappe de fils enduits pour la mise en oeuvre d'un procédé de fabrication d'une nappe de fils enduits conformément à l'invention ;
- la figure 3 représente une vue schématique de dessus d'une nappe formée selon un premier mode opératoire du dispositif de la figure 2 ;
- la figure 4 représente une vue schématique de dessus d'une nappe formée selon un deuxième mode opératoire du dispositif de la figure 2 ;
- la figure 5 représente une vue schématique en coupe, dans un plan transversal à la direction de déroulement des fils enduits, au niveau du module de soudage par laser du dispositif de la figure 2, du soudage de deux fils entre eux ;
- la figure 6 représente une vue en perspective schématique d'une nappe de fils enduits réalisée conformément à l'invention ;
- la figure 7 représente une vue en perspective schématique du drapage de la nappe de la figure 6 autour d'un mandrin, dans le cadre d'une application de la nappe obtenue conformément à l'invention.

On forme tout d'abord une pluralité de fils enduits, selon l'une des techniques connues, de préférence par un procédé d'enduction de fibres céramiques, au trempé, dans un bain de métal liquide. Ces fils sont enroulés chacun sur une bobine. Chaque fil a par exemple un diamètre de 0,2 à 0,3 mm.

En référence à la figure 2, une pluralité de bobines 7, chacune avec un fil enduit 8 enroulé à sa circonférence, est disposée sur un module 9 de bobines 7. Ce module 9 permet de placer les bobines 7 de telle sorte qu'elles puissent être dévidées en direction d'un module d'ourdissage, présenté ci-après, sans que les fils 8 ne se croisent. En l'espèce, le module de bobines 9 comporte une structure en triangle isocèle supportant les bobines 7, pour moitié sur un côté du triangle et pour moitié sur l'autre côté, la pointe du triangle étant dirigée du côté vers lequel les fils 8 des bobines 7 sont dévidés, vers un lieu situé sur l'axe de symétrie du triangle que forme la structure du module de bobines 9.

Selon une autre forme de réalisation, chaque bobine 7 peut supporter un faisceau de fils enduits. Ainsi, pour former une nappe de cent fils enduits, on peut utiliser dix bobines 7 comportant chacune un faisceau de dix fils enduits enroulé à sa circonférence.

Les fils enduits 8 sont dévidés en direction d'un module 10 d'ourdissage. Ce module d'ourdissage 10 est ici représenté de façon schématique et non détaillée, car sa structure est accessible à l'homme du métier. Il est comparable à un module d'ourdissage utilisé dans le domaine du tissage. Le module d'ourdissage 10 comprend des moyens de guidage permettant de disposer les fils 8, tendus, parallèlement les uns aux autres, en une couche dans un même plan, sans chevauchement entre eux, en contact les uns avec les autres. L'objectif est de constituer une nappe plane de fils 8 parallèles en contact les uns avec les autres.

Les fils 8 ainsi ourdis sont entraînés dans un module 11 de soudage par laser. Ce module comporte un support 12 plan sur lequel se déplacent les fils 8, au-dessus duquel est monté un dispositif 13 de soudage par laser. Les fils 8 sont donc entraînés devant le dispositif de soudage par laser 13. L'ensemble est de préférence contenu dans une atmosphère neutre, par exemple dans une atmosphère d'argon projeté par une buse. Le dispositif 13 de soudage par laser peut par exemple comporter un laser de type YAG (Yttrium Aluminium Garnet) dopé au néodyme (Nd), qui présente l'avantage d'une grande précision quant à sa puissance et au point d'impact de son faisceau laser, ainsi que l'avantage d'une grande finesse du faisceau. Le laser présentera ici de préférence une puissance comprise entre 2 et 5 W.

En aval du module de soudage par laser 11, les fils 8 sont entraînés par un module 17 d'entraînement des fils 8, depuis le module de bobine 9, en translation sur le support 12. Ce module d'entraînement 17 comporte en l'espèce une bobine 17' rotative autour de laquelle les fils 8 sont enroulés. La bobine 17' est entraînée en rotation, comme représenté par la flèche 18. Ainsi, les fils 8 sont entraînés depuis leur bobine 7 du module de bobines 9, le long du module d'ourdissage 10 et du module de soudage par laser 11, par le module d'entraînement 17, l'ensemble formant un dispositif 55 de formation d'une nappe liée de fils enduits 8. La nappe liée est enroulée sur la bobine 17' du module d'entraînement.

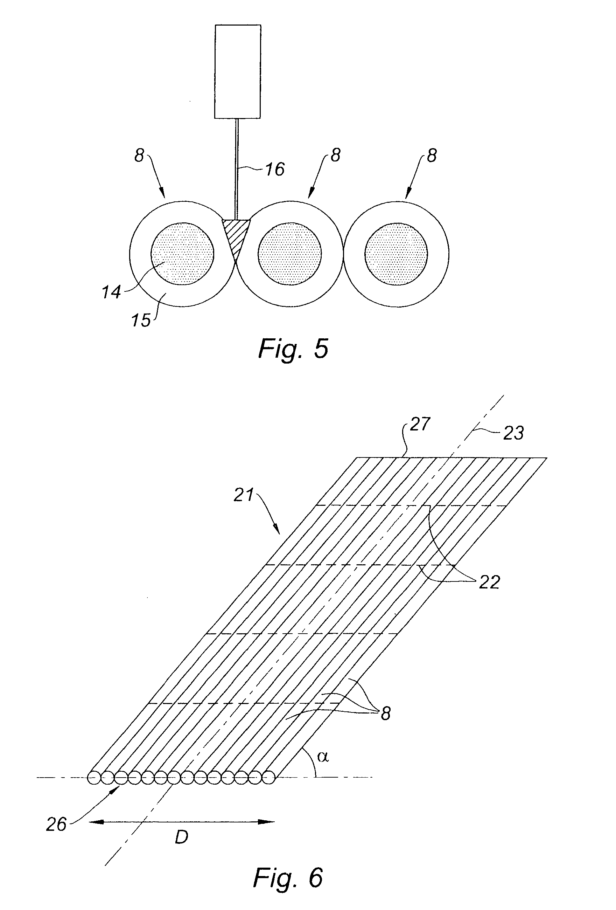

On voit sur la figure 5 une représentation en coupe, dans un plan transversal à la direction de déroulement des fils 8, au niveau du module de soudage par laser 11, du soudage de deux fils 8 entre eux. Le soudage effectué est un soudage par points par le dispositif de soudage par laser 13. Chaque fil 8 est solidarisé à ses voisins au niveau d'une pluralité de points de soudure. Chaque fil 8 comporte, comme on l'a vu précédemment, une fibre céramique 14, enrobée d'une gaine de métal 15, par exemple un alliage de Ti. Le faisceau laser est dirigé, comme représenté par la flèche 16, dans la direction d'un point de contact entre deux fils 8 successifs, perpendiculairement au plan contenant globalement les axes des fils 8 entraînés sur le support 12. Il s'ensuit une fusion locale de leur gaine de métal 15. On utilise le laser à faible puissance, par ailleurs très concentrée, de manière à s'assurer que la fibre céramique 14 ne soit pas affectée par cette fusion locale. Un volume minimum de la gaine métallique 15 est fondu. Il suffit à assurer la solidarisation des fils 8 à cet endroit. Les paramètres du soudage sont optimisés de telle sorte que le bain de soudage résultant de la fusion du métal ne soit pas débouchant.

Il est important que le faisceau laser soit dirigé sur une zone ponctuelle chevauchant deux fils 8, perpendiculairement au plan des fils 8, de manière qu'il n'endommage pas les fibres de céramique 14, dont l'intégrité est une condition nécessaire à la fonction qui leur est assignée, dans l'application à la formation d'une pièce avec un insert en matériau composite.

Il n'est pas nécessaire que les points de soudure soient très résistants. Leur fonction est uniquement d'assurer une solidarisation globale, ou maintien, des fils 8 entre eux, en vue de constituer une nappe liée. Cette solidarisation doit juste être assez forte pour permettre la manutention de la nappe, ses éventuels bobinage et débobinage, en vue par exemple de la constitution d'une pièce avec un insert en matériau composite. Il s'agit donc d'un soudage de maintien des fils 8 entre eux.

Les figures 3 et 4 représentent de façon schématique deux modes opératoires envisagés pour le module de soudage par laser 11, en l'espèce pour la formation d'une nappe de douze fils enduits 8.

Dans le mode opératoire de la figure 3, lorsque les fils enduits 8 sont situés sous le dispositif de soudage par laser 13, le module d'entraînement 17 est arrêté, afin de laisser les fils 8 immobiles. Le dispositif de soudage 13 effectue alors une série de points de soudure entre les fils 8 voisins, le long d'un segment perpendiculaire à leur axe de défilement sous le dispositif de soudage 13. A cet effet, le dispositif de soudage 13 effectue un premier point de soudure 19 entre deux fils 8, comme exposé ci-dessus en référence à la figure 5. Il est alors arrêté et déplacé, perpendiculairement à la direction de défilement des fils 8, jusqu'au droit du point de contact suivant entre deux fils 8, qu'il soude selon un deuxième point de soudure 19, et ainsi de suite, jusqu'à ce que tous les fils 8 soient solidarisés entre eux le long de ce segment de déplacement. Le dispositif de soudage 13 effectue donc un segment de points de soudure 19, perpendiculaire à l'axe de défilement des fils 8 sous le dispositif de soudage 13. Le module d'entraînement 17 est alors actionné de manière à faire défiler les fils 8 sur une longueur "L" devant le dispositif de soudage 13, puis l'opération est répétée sur un autre segment, parallèle au premier.

Dans le mode opératoire de la figure 4, les fils 8 sont entraînés de manière continue, dans la direction et le sens de défilement représentés par la flèche 20, mouvement imposé par le module d'entraînement 17. Le dispositif de soudage 13 effectue les mêmes opérations que précédemment, à savoir un soudage, puis le déplacement vers le point suivant selon une trajectoire perpendiculaire à la direction 20 du mouvement des fils 8, etc., depuis le premier fil 8 vers le dernier, puis inversement. Si la vitesse de déplacement des fils 8 est suffisamment faible, le soudage des points 19 entre deux fils en mouvement 8 est possible. On obtient donc une série de points de soudure 19 entre les fils 8, qui forme un zigzag sur la nappe formée par les fils 8.

Il est également possible d'obtenir une telle répartition des points de soudure 19 en zigzag en arrêtant le module d'entraînement 17 lors du soudage de chaque point de soudure 19, le module d'entraînement 17 entraînant les fils 8 sur une faible distance "1" entre chaque point de soudure 19, tandis que le dispositif de soudage 13 est déplacé.

Il est également possible de n'opérer qu'un ralentissement du mouvement des fils 8 au moment du soudage des points 19.

L'avantage d'une telle répartition des points de soudure 19 est sa plus grande homogénéité sur la surface de la nappe constituée par les fils 8.

Quoi qu'il en soit, en sortie du module de soudage par laser 11, les fils 8 se présentent sous la forme d'une nappe liée, au sein de laquelle ils sont solidarisés les uns aux autres au niveau des points de soudure 19 de maintien. La nappe est enroulée sur la bobine 17' du module d'entraînement 17.

Il n'est pas fait référence ici à la phase d'initialisation du procédé de fabrication d'une nappe liée de fils enduits 8. Cette phase peut être adaptée librement par l'homme du métier, par exemple en enroulant en début de procédé les fils 8 sur la bobine 17' sans qu'ils soient solidarisés les uns aux autres, la portion la plus intérieure de la nappe bobinée fmale n'étant donc pas sous forme de nappe, ou par exemple en entraînant les fils en début de procédé grâce à un autre dispositif d'entraînement et en les reliant à la bobine 17' lorsqu'ils commencent à se présenter sous forme de nappe.

La distance "L" entre les segments de points de soudure 19, dans le cadre de la configuration en segments de la figure 3, ou encore la distance longitudinale "1" entre deux points de soudure 19 successifs, dans la configuration en zigzag de la figure 4, est dimensionnée en fonction de la rigidité souhaitée pour la nappe de fils enduits 8. Ainsi, pour une nappe rigide, les points de soudure 19 seront rapprochés les uns des autres, pour une nappe souple, les points de soudure 19 seront éloignés les uns des autres. D'autres configurations de répartition des points de soudure 19 sont bien sûr envisageables. La configuration et les espacements des points 19 seront choisis en fonction de l'application à laquelle est destinée la nappe liée, notamment si elle doit être bobinée, vrillée, ... tout en respectant un espacement minimum pour assurer la cohésion de l'ensemble dans les conditions définies de l'application. Les spécifications relatives à la configuration de la répartition des points de soudure 19 sont moins liées au procédé lui-même qu'à l'application à laquelle la nappe de fils enduits 8 est destinée.

Grâce à la vitesse d'exécution du soudage laser et à sa précision, il est possible d'assurer la fabrication d'une nappe liée de fils enduits 8, les fils 8 étant solidarisés les uns aux autres, dans un système automatisé, industriellement, pour la mise en oeuvre du procédé qui vient d'être décrit. On obtient ainsi rapidement de grandes quantités de nappes de fils enduits 8 - on peut former plusieurs kilomètres d'une même nappe - se présentant sous une forme exploitable de diverses manières. Par ailleurs, les nappes sont solidarisées par fusion de la gaine de métal 15 des fils 8, donc sans apport de matière, notamment sans apport de liant tel qu'une colle, ce qui permet de supprimer, dans un procédé plus global de formation d'une pièce avec un insert de matériau composite utilisant des fils enduits, toutes les étapes de déliantage.

On décrit ci-après un exemple d'application de la nappe formée selon l'invention.

En référence à la figure 6, on a donc formé une nappe 21 de fils enduits 8, comportant ici quatorze fils parallèles les uns aux autres, solidarisés par un procédé de formation d'une nappe tel que celui représenté sur la figure 3. Ainsi, les fils 8 sont reliés par des points de soudure s'étendant le long de segments 22 parallèles les uns aux autres et perpendiculaires à l'axe global 23 de la nappe 21 (c'est-à-dire perpendiculaires aux axes des fils 8 lorsque ces derniers s'étendent de façon rectiligne). Les extrémités de la nappe 21 sont coupées en biseau, de façon à obtenir des segments 26, 27 d'extrémité de la nappe 21 de largeur "D", formant un angle "α" avec l'axe 23 de la nappe 21.

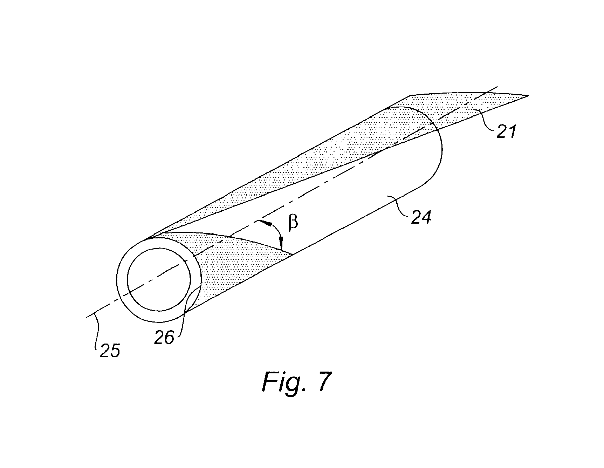

En référence à la figure 7, la nappe 21 ainsi biseautée est drapée sur un mandrin 24 cylindrique. Ce mandrin 24 est un tube métallique creux, de préférence dans le même métal que celui dont sont enduites les fibres de céramique des fils enduits 8, ici un alliage de Titane. Il présente un périmètre externe circulaire dont la valeur est égale à la valeur de la largeur "D" des extrémités biseautées de la nappe 21. La nappe 21 est, préalablement au drapage, enroulée, par l'un de ses segments d'extrémité 26, autour d'une extrémité du mandrin 24, puis drapée de manière hélicoïdale autour du mandrin 24, drapage hélicoïdal possible du fait de l'angle α entre l'axe 23 de la nappe 21 et les segments 26, 27 formant les extrémités biseautées de la nappe 21, notamment le segment 26 qui est préalablement enroulé autour d'une extrémité du mandrin 24. Les bords longitudinaux de la nappe 21 forment un angle β (avec β = π/2 ― α) avec l'axe 25 du mandrin 24. La nappe 21 est drapée tout autour du mandrin 24, recouvrant intégralement sa surface externe, sans chevauchement des fils enduits 8 de la nappe 21 entre eux. Les bords longitudinaux de la nappe 21 sont mis en contact les uns avec les autres, successivement à chaque tour du drapage. Finalement, la nappe 21 a été conçue et ses segments 26, 27 d'extrémité biseautés de façon à ce que ses dimensions correspondent à la surface développée du mandrin 24.

En fonction de l'épaisseur de l'insert en matériau composite à matrice métallique qui est souhaité dans la pièce finale, il est possible de draper une pluralité de nappes 21 autour du mandrin 24, les unes sur les autres. De préférence, lorsqu'une nappe est drapée autour de la nappe 21 précédente, son positionnement initial à l'extrémité du mandrin 24 est effectué de telle manière qu'une fois la nouvelle nappe drapée, chacun de ses fils enduits 8 s'étendent entre deux fils enduits 8 de la nappe précédente, en quinconce, ce qui assure une meilleure compacité de l'ensemble. Par ailleurs, il est possible de décaler angulairement les nappes 21 afin qu'en outre les courbes de jonction de leurs bords longitudinaux soient décalées les unes des autres, de préférence le plus éloignées possible (chaque courbe de contact entre deux bords longitudinaux peut par exemple s'étendre à équidistance des deux courbes proximales de la nappe précédente). Il va de soi que les dimensions de chaque nouvelle nappe 21 doivent être ajustées en fonction du nombre de nappes 21 qui ont déjà été drapées. Le nombre de fils composant chaque nappe supplémentaire peut aisément se calculer, connaissant les dimensions des fils unitaires, du périmètre du mandrin et du nombre de couches déjà drapées. De préférence, l'extrémité du mandrin 24, où sont initialement positionnées et enroulées les nappes 21, comporte un rebord formant butée axiale, de dimension radiale, soit égale à l'épaisseur du nombre totale de nappes 21, soit supérieure. Il peut en être de même pour l'autre extrémité.

L'angle α est déterminé par l'homme du métier en fonction des contraintes et divers modes de sollicitation (centrifuge, traction, torsion, compression ...) auxquels va être soumise la pièce finale. En effet, ce sont principalement les fibres de céramique qui reprennent les efforts, leur orientation et leur répartition ayant une influence déterminante sur le comportement de la pièce. Il est ainsi possible d'adapter l'angle α, le diamètre des fils enduits 8, le diamètre des fibres céramiques, etc., en fonction de l'application considérée. Dans le cas d'espèce considéré, α est pris égal à 45°.

Il est éventuellement possible, si une pluralité de nappes 21 est drapée autour du mandrin 24, de prévoir des angles α différents pour ces nappes 21. Il est toutefois conseillé, dans ce cas, d'utiliser des fils enduits 8 dont la gaine métallique est d'épaisseur importante, afin de bien protéger les fibres céramiques s'étendant en leur sein.

Afin d'assurer le drapage des nappes 21, ces dernières sont solidarisées, soit au mandrin 24, s'il s'agit de la première nappe 21, soit à la nappe précédente, s'il s'agit d'une nappe 21 ultérieure, en début de drapage, lorsque l'extrémité 26 de la nappe 21 est enroulée autour de l'extrémité du mandrin 24 ou de la nappe précédente. Le drapage est mis en oeuvre, et l'autre extrémité de la nappe 21 est solidarisée à l'ensemble de manière similaire. De préférence, on utilise un procédé de soudage par contact entre deux électrodes et passage d'un courant moyenne fréquence pour souder une fine bande des parties d'extrémité de la nappe 21. Tout autre procédé peut être mis en oeuvre.

Selon une autre forme de réalisation, le soudage d'une nappe 21 au mandrin 24 ou à la nappe précédente peut être effectué le long d'une ligne longitudinale par rapport au mandrin 24, de préférence selon un procédé de soudage par contact entre deux électrodes et passage d'un courant moyenne fréquence.

Une fois le nombre désiré de nappes 21 drapées autour du mandrin 24 atteint, l'ensemble est inséré dans un fourreau, de diamètre interne égal au diamètre externe de cet ensemble. Ce fourreau est de préférence constitué du même alliage métallique que l'enrobage des fibres des fils enduits 8, ici un alliage de Ti. Il est complémentaire avec les rebords formant butées axiales du mandrin 24, de sorte que l'ensemble, qui est de préférence bouché à chacune de ses extrémités par des plaques métalliques circulaires, soit homogène et se présente sous la forme d'un cylindre. Les plaques circulaires et le fourreau sont de préférence soudés par soudage par faisceau d'électrons, de manière à constituer un conteneur étanche ; ces plaques sont de préférence en alliage de Titane. Le soudage par faisceau d'électrons permet de faire préalablement le vide à l'intérieur du fourreau. L'ensemble formé est alors compacté de manière isostatique à chaud.

Lors de la compaction isostatique à chaud, par exemple sous une pression de 1000 bar à 950°C, l'alliage de Titane est amené à diffuser et à créer la matrice métallique du matériau composite, au sein de laquelle s'étendent les fibres de céramique. L'alliage de Titane étant visqueux à haute température, il autorise un bon flux de diffusion de la matière, sans endommager les fibres de céramiques, lors de la formation de la matrice métallique. On obtient ainsi, un arbre, comportant une épaisseur interne d'alliage de Titane, correspondant au mandrin 24, un insert central de matériau composite à matrice d'alliage de Titane, dans lequel s'étendent les fibres céramiques de manière hélicoïdale, et une épaisseur externe d'alliage de Titane, correspondant au fourreau.

Cet arbre peut être usiné, en fonction de la pièce finale désirée. De préférence, les extrémités de l'arbre, avec les plaques métalliques et éventuellement un ou des rebords de butée axiale des nappes, sont supprimées, afin d'obtenir un arbre uniforme sur l'ensemble de sa longueur. Un tel arbre présente l'avantage d'une très bonne résistance aux efforts, du fait de l'insert en matériau composite, qui autorise que l'épaisseur totale de sa paroi soit nettement inférieure à celle des arbres classiques. Cette faible épaisseur implique, outre un gain de masse considérable, un faible encombrement, utile dans les applications nécessitant la présence de nombreux arbres coaxiaux.

Le procédé fabrication d'une nappe de fils enduits, décrit dans la présente demande, permet également la mise en oeuvre d'un procédé de formation d'une pièce avec un insert de fils enduits, directement par bobinage d'une nappe autour d'un mandrin puis compactage de l'ensemble. La pièce, comportant un insert, ainsi formée, est obtenue beaucoup plus rapidement que par les procédés de l'art antérieur utilisant une préforme.

En définitive, le procédé de formation de nappes de fils enduits de la présente demande permet l'obtention d'un produit intermédiaire - la nappe - qui peut être utilisé dans de nombreuses applications. Ce produit intermédiaire autorise une grande rapidité des procédés mis en oeuvre.

## Revendications

1. Procédé de fabrication d'une nappe liée comportant une pluralité de fils enduits (8), qui comprennent une fibre céramique (14) enrobée d'une gaine métallique (15), **caractérisé par le fait que** l'on dispose les fils les uns à côté des autres dans un même plan, tendus, parallèlment et en contact les uns avec les autres, et on soude les fils entre eux, par points, par soudage laser (13), le faisceau laser étant dirigé dans la direction d'un point de contact entre deux fils successifs sur une zone ponctuelle chevauchant deux fils, perpendiculairement au plan des fils, de manière qu'il n'endommage pas les fibres de céramique, le faisceau laser étant arrêté et déplacé, perpendiculairement à la direction des fils, entre deux points de soudure successifs.

2. Procédé selon la revendication 1, selon lequel on entraîne les fils devant un dispositif (13) de soudage par laser qui forme des points de soudure (19) alignés en segments perpendiculaires à la direction d'entraînement des fils.

3. Procédé selon la revendication 2, dans lequel les fils (8) sont immobiles lors de la formation d'un segment de points de soudure.

4. Procédé selon la revendication 1, selon lequel on entraîne les fils devant un dispositif de soudage par laser qui forme des points de soudure disposés en zigzag sur la nappe.

5. Procédé selon la revendication 4, selon lequel les fils (8) sont entraînés de manière continue devant le dispositif de soudage par laser (13).

6. Procédé selon la revendication 4, dans lequel les fils sont immobiles lors de la formation d'un point de soudure.

7. Procédé selon l'une des revendications 2 à 6, selon lequel, préalablement à leur passage devant le dispositif de soudage par laser, les fils sont entraînés dans un module d'ourdissage (10).

8. Procédé selon l'une des revendications 2 à 7, dans lequel les fils sont entraînés par une bobine rotative.

9. Procédé selon l'une des revendications 2 à 8, dans lequel les fils sont entraînés à partir d'un module de bobines, chacune d'entre elles comportant un fil enduit bobiné ou un faisceau de fils enduits.

10. Nappe liée de fils enduits, chaque fil comprenant une fibre céramique (14) enrobée d'une gaine métallique (15), formée par le procédé de formation d'une nappe de fils enduits de l'une des revendications 1 à 9.

11. Nappe liée de fils enduits selon la revendication 10, dont les fils sont maintenus par des points de soudure alignés en segments parallèles.

12. Nappe liée de fils enduits selon la revendication 10, dont les fils sont maintenus par des points de soudure disposés en zigzag sur la nappe.

## Claims

1. A method for manufacturing a bonded lap including a plurality of coated threads (8), which include a ceramic fibre (14) wrapped with a metal sheath (15), **characterised in that** the threads are provided close to one another in a same plane, tensioned, in parallel and into contact with one another, the threads are welded together by spots, through laser welding (13), the laser beam being directed into the direction of a contact point between two consecutive threads on a point area overlapping two threads, perpendicularly to the plane of the threads, so that it does not damage the ceramic fibres, the laser beam being stopped and moved, perpendicularly to the direction of the threads, between two consecutive weld spots.

2. The method according to claim 1, wherein the threads are driven in front of a laser welding device (13) which forms weld spots (19) aligned into segments perpendicular to the driving direction of the threads.

3. The method according to claim 2, wherein the threads (8) are motionless upon forming a segment of weld spots.

4. The method according to claim 1, wherein the threads are driven in front of a laser welding device which forms weld spots provided in a zigzag manner on the lap.

5. The method according to claim 4, wherein the threads (8) are driven continuously in front of the laser welding device (13).

6. The method according to claim 4, wherein the threads are motionless upon forming a weld spot.

7. The method according to any of claims 2 to 6, wherein, prior to passing in front of the laser welding device, the threads are driven in a warping module (10).

8. The method according to any of claims 2 to 7, wherein the threads are driven by a rotary spool.

9. The method according to any of claims 2 to 8, wherein the threads are driven from a module of spools, each of which including a spooled coated thread or a beam of coated threads.

10. A bonded lap with coated threads, wherein each thread includes a ceramic fibre (14) wrapped with a metal sheath (15), formed by the method for manufacturing a lap with coated threads of any of claims 1 to 9.

11. The bonded lap with coated threads according to claim 10, wherein the threads are held by weld spots aligned into parallel segments.

12. The bonded lap with coated threads according to claim 10, wherein the threads are held by weld spots provided in a zigzag manner on the lap.

## Patentansprüche

1. Verfahren zur Herstellung einer verbundenen Bahn, umfassend mehrere beschichtete Fäden (8), die Keramikfasern (14) umfassen, die von einer metallischen Hülle (15) ummantelt sind, **dadurch gekennzeichnet, dass** die Fäden in einer Ebene parallel nebeneinander gespannt angeordnet werden und sich gegenseitig berühren, und dass die Fäden punktweise durch Laserschweißen (13) miteinander verschweißt werden, wobei der Laserstrahl rechtwinkelig zur Ebene der Fäden in Richtung eines Berührungspunktes zwischen zwei aufeinander folgenden Fäden auf eine Punktfläche geleitet wird, die zwei Fäden überlappt, so dass er die Keramikfasern nicht beschädigt, wobei der Laserstrahl zwischen zwei aufeinander folgenden Schweißpunkten angehalten und rechtwinkelig zur Richtung der Fäden versetzt wird.

2. Verfahren nach Anspruch 1, wobei die Fäden an einer Laserschweißvorrichtung (13) vorbeigeführt werden, die Schweißpunkte (19) bildet, die in zur Transportrichtung der Fäden rechtwinkeligen Segmenten angeordnet werden.

3. Verfahren nach Anspruch 2, wobei die Fäden (8) bei der Bildung eines Segmentes von Schweißpunkten nicht bewegt werden.

4. Verfahren nach Anspruch 1, wobei die Fäden an einer Laserschweißvorrichtung vorbeigeführt werden, die Schweißpunkte bildet, die in Zickzacklinie auf der Bahn angeordnet werden.

5. Verfahren nach Anspruch 4, wobei die Fäden (8) kontinuierlich an der Laserschweißvorrichtung (13) vorbeigeführt werden.

6. Verfahren nach Anspruch 4, wobei die Fäden bei der Bildung eines Segmentes von Schweißpunkten nicht bewegt werden.

7. Verfahren nach einem der Ansprüche 2 bis 6, wobei die Fäden, bevor sie an der Laserschweißvorrichtung vorbeigeführt werden, durch ein Schärmodul (10) geführt werden.

8. Verfahren nach einem der Ansprüche 2 bis 7, wobei die Fäden von einer Drehspule angetrieben werden.

9. Verfahren nach einem der Ansprüche 2 bis 8, wobei die Fäden von einem Modul aus Spulen angetrieben werden, wobei jede einen aufgewickelten beschichteten Faden oder ein Bündel aus beschichteten Fäden umfasst.

10. Verbundene Bahn aus Fäden, wobei jeder Faden eine Keramikfaser (14) umfasst, die von einer metallischen Hülle (15) ummantelt ist, hergestellt durch das Verfahren zur Herstellung einer verbundenen Bahn nach einem der Ansprüche 1 bis 9.

11. Verbundene Bahn aus Fäden nach Anspruch 10, wobei die Fäden durch Schweißpunkte, die in Segmenten parallel angeordnet sind, zusammengehalten werden.

12. Verbundene Bahn aus beschichteten Fäden nach Anspruch 10, wobei die Fäden durch Schweißpunkte, die in Zickzacklinie auf der Bahn angeordnet sind, zusammengehalten werden.
